Europäisches Patentamt

European Patent Office

Office européen des brevets

(19)

(11) **EP 1 037 011 A2**

(12) **EUROPEAN PATENT APPLICATION**

(43) Date of publication:
**20.09.2000 Bulletin 2000/38**

(51) Int Cl.$^7$: **G01B 11/06**

(21) Application number: **00302172.2**

(22) Date of filing: **16.03.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **16.03.1999 GB 9906012**

(71) Applicants:
- **API Foils Limited**
  **Livingston, West Lothian,**
  **Scotland RH54 5DJ (GB)**
- **THE UNIVERSITY COURT OF**
  **THE UNIVERSITY OF EDINBURGH OF OLD**
  **COLLEGE**
  **Edinburgh EH8 9YL Scotland (GB)**
- **HERIOT-WATT UNIVERSITY**
  **Edinburgh EH14 4AS (GB)**

(72) Inventors:
- **Jones, Anita**
  **West Linton, Peeblesshire EH46 7AL (GB)**
- **Barton, James Stephen**
  **Gorebridge, Midlothian EH23 4SQ (GB)**
- **De Freitas, Jolyon Mark**
  **Ratho, Newbridge EH28 8RP (GB)**
- **Jones, Julian David Clayton**
  **West Linton, Peeblesshire EH46 7AL (GB)**
- **Spencer, Philip Norman**
  **Ratho, Newbridge EH28 8RZ (GB)**
- **Gregory, Guy John**
  **Livingston, EH54 9JA (GB)**

(74) Representative: **Slingsby, Philip Roy et al**
**Page White & Farrer**
**54 Doughty Street**
**London WC1N 2LS (GB)**

(54) **Thickneee measurement apparatus**

(57)     Measurement apparatus for measuring the thickness of a fluorescent coating on a web in a continuous deposition process, the measurement apparatus comprising: a control arrangement including a light source, a light detector and a data processing unit; and a sensing head located adjacent the web and including an optical arrangement coupled to the light source and the light detector by optical fibre means and arranged to focus light received from the light source via the optical fibre means on to the web and to focus light received from the web on to the optical fibre means whereby it may be received by the light detector; and a drive arrangement operable under the control of the data processing unit to move the sensing head across the web; the data processing unit being arranged to receive from the light detector a signal indicative of a detected light intensity and to process that signal to determine an indication of the thickness of the coating.

FIG. 2

## Description

This invention relates to apparatus for measuring the thickness of a layer of material such as a coating.

There are numerous techniques available for measurement of the thickness of a layer of material. Examples include microscopy, measurement under physical contact (e.g. by using a micrometer), beta particle backscatter measurement, photothermal radiometry, optical interferometry and X-ray fluorescence measurement. However, these methods suffer from a number of disadvantages. In many situations it is not practical to make contact with the layer of material to be measured - for example because it is moving quickly or because it might be damaged on contact. Non-contact methods of measurement generally rely on the layer of material having tightly defined physical properties that are susceptible to the measurement method, and such methods cannot be used to measure other materials. Some methods, such as X-ray fluorescence measurement, have safety risks in most situations.

One particularly demanding situation is the measurement of the thickness of a layer of material in the manufacture of sheet or web products, especially if the thickness is to be measured during production, for example to allow the production process to be controlled to maintain a desired thickness. In this situation off-line analysis (e.g. by microscopy) of samples taken from the manufacturing process is problematic because it may be difficult to take samples from the moving sheet or web; the taking of samples may damage the sheet or web; and there may be an unacceptable time lag in the off-line measurement process that prevents the measurements being used to control the production process in real time. Measurement methods that require contact with the moving sheet or web can interfere with the production process and damage the product. Non-contact methods such as beta particle backscatter measurement, photothermal radiometry, optical interferometry and X-ray fluorescence measurement suffer from problems such as: (a) they can only be used for a limited range of coating materials; (b) insensitivity at very small thicknesses; and (c) the measurement apparatus being relatively expensive. Another approach is to attempt to measure thickness by inspecting the sheet as it is travelling during the production process. However, it may be difficult to view the sheet if the sheet is travelling quickly, especially if precise measurement is needed; and as it moves the sheet may vibrate across the direction of travel.

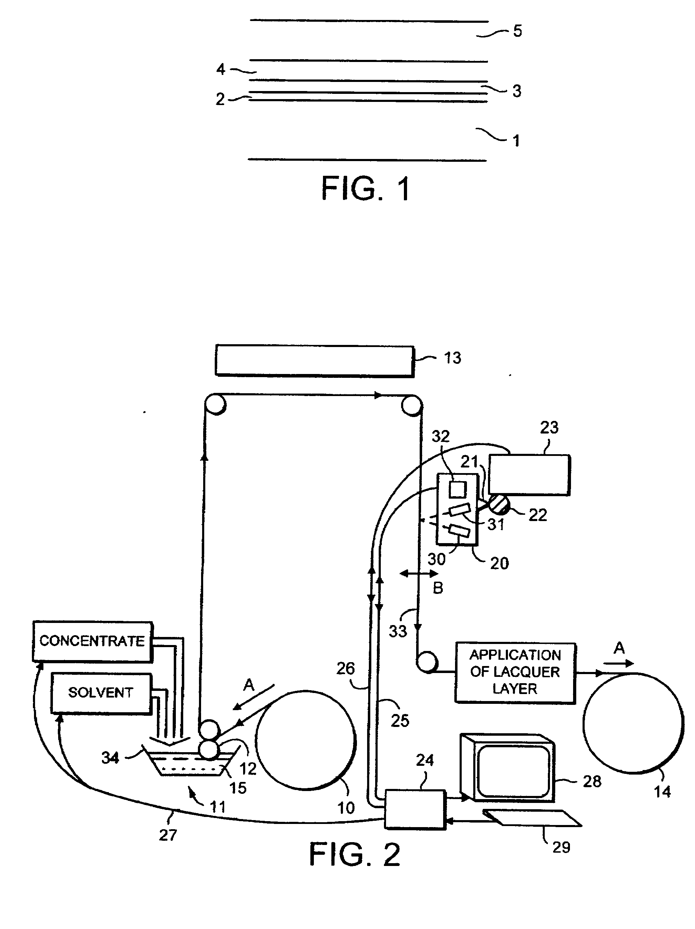

One specific example of a situation where these problems are felt is in the production of thermal transfer foil sheets, which are used for example for the deposition of foil patterns on to substrates such as sheets of paper. Figure 1 shows a cross section of a sheet of thermal transfer foil sheet. The sheet comprises a backing layer 1 of polyester film. On the backing layer is deposited a thin release layer 2 of a wax material. The thickness of the release layer is approximately 10 nm, although at that scale there is normally significant irregularity in the thickness of the layer. On the release layer is an optional dyed lacquer layer 3 for colouring and a metallised layer 4 of, for example, vacuum deposited aluminium. Finally, over the metallised layer is a thermal adhesive layer 5.

In use, the adhesive layer 5 of the film is pressed against a substrate such as a sheet of paper by a shaped hot die. This activates the thermal adhesive layer in the areas where the die presses it against the substrate, causing the sheet to adhere to the substrate in those areas. Then the die is released and the film is stripped from the substrate. The bond between the thermal adhesive layer 5 and the substrate is greater than that between the release layer 2 and the dyed layer 3. Therefore, in the areas where the adhesive has stuck to the substrate the sheet parts at the release layer 2, leaving the dyed layer and the metallised layer fixed to the substrate in those areas.

The successful operation of the hot transfer foil is sensitively dependent on the thickness of the thin release layer 3. If the release layer is too thick then the appearance of the finished foil layer after deposition can be poor. If the release layer is too thin then when the sheet is stripped from the substrate the metallised layer 3 will not part properly from the backing layer 1, and the foil will not be deposited properly on to the substrate.

Thermal transfer foil is normally produced in a continuous web process, in which the web can run at high speed. This high speed, together with the fact that the release layer 3 is very thin, makes it extremely difficult to measure the thickness of the release layer as the film is being produced. Therefore, manufacturers have relied on the experience of machine operators to control deposition of the release layer.

There is therefore a need for a measuring technique that can allow the thickness of a coating to be measured more easily and accurately. In particular, there is a need for a technique that can allow rapid and accurate in-process control of coating thickness, with high accuracy down to very small thicknesses, and which is compatible with a wide range of subject materials.

Numerous systems are known for measurement of film thickness by means of fluorescence intensity of the film.

US 4,956,558 describes a system for determining the thickness of a fluorescent oil film on a bar rail. Blue-green laser light is focussed on to the end of an optical fibre which passes through the bar rail. Light leaving the end of the fibre illuminates the film and excites it to fluoresce. The fibre picks up a certain amount of the fluorescent light and carries it to a detector arrangement which provides a signal indicative of the thickness of the film.

US 4,250,382 describes a system for measuring thickness of a silicone coating to which a fluorescent pigment has been added. It notes that fluorescent dyes (instead of pigments) were found to have unacceptable properties for coat weight determinations.

US 4,841,156 describes a system for measuring the thickness of a fluorescent coating on a film. The coating is illuminated with ultraviolet light, which excites the coating to fluoresce. The intensity of the fluorescent light is detected and used to determine the thickness of the coating. If the coating fluoresces at the same wavelengths as the film then an ultraviolet fluorescer can be added to the coating. The document notes that the amount of fluoresced light is linear with respect to the amount of coating present as long as the coating layer is quite thin. As the layer thickness increases the amount of light to thickness relationship becomes nonlinear.

EP 0 336 029 A, WO 89/10268, US 3,930,063, US 3,956,630, US 4,597,093, US 4,922,113 and US 5,717,217 disclose other arrangements for fluorescence measurement of films.

Prior art arrangements for the use of fluorescence to measure coating thickness do not describe measurement hardware that is generally suitable for practical use on a coating web. In that application there is a need for the measurement equipment to be robust but still be sufficiently accurate to measure the thickness of very thin coatings over a relatively wide web area.

According to one aspect of the present invention there is provided measurement apparatus for measuring the thickness of a fluorescent coating on a web in a continuous deposition process, the measurement apparatus comprising: a control arrangement including a light source, a light detector and a data processing unit; and a sensing head located adjacent the web and including an optical arrangement coupled to the light source and the light detector by optical fibre means and arranged to focus light received from the light source via the optical fibre means on to the web and to focus light received from the web on to the optical fibre means whereby it may be received by the light detector; and a drive arrangement operable under the control of the data processing unit to move the sensing head across the web; the data processing unit being arranged to receive from the light detector a signal indicative of a detected light intensity and to process that signal to determine an indication of the thickness of the coating.

Preferably the optical arrangement is coupled to the light source by a first optical fibre and to the light detector by a second optical fibre. Alternatively, a single optical fibre may be used. Where two fibres are used in parallel, the optical arrangement suitably includes first optics for focussing light passing between the sensing head and the web, second optics for focussing light passing between the first optics and the first optical fibre, third optics for focussing light passing between the first optics and the second optical fibre and a beam splitter located between the first optics and the second and third optics. The first, second and third optics may be or include a lens. Specifically, the third optics suitably comprises a lens for focusing light received from the web and the sensing head is arranged to illuminate the web through the lens.

The sensing head is preferably arranged to receive light from the web in a reception direction and to illuminate the web in a direction parallel to the reception direction. Alternatively, the sensing head may be arranged to receive light from the coating in a reception direction and to illuminate the coating at an angle to the reception direction. The reception direction may suitably be angled with respect to a direction that is coplanar with the illumination direction and is angled equally to the illumination direction with respect to the coating. Specular reflections from the coating are thereby less likely to be received by the detector.

The light source may be a laser. The light source may be a frequency doubled laser. The light source is preferably a frequency doubled Nd-YAG laser. The light source may be capable of emitting light at a single wavelength. Preferably substantially all the emission of the light source is at a wavelength greater than 500nm.

The light source and/or the sensing head are preferably arranged to illuminate the web with polarised light (suitably circularly polarised light), suitably by means of a polariser included in the sensing head. The sensing head then suitably includes a polariser for filtering light received from the web, for example to filter out reflected light and allow light from fluorescence to pass preferentially.

The detector may be operable in a calibration mode to selectively sense light of a first wavelength corresponding to an emission wavelength of the light source and in a measurement mode to selectively sense light of a second wavelength longer than the first wavelength. By this means the system may be calibrated for intensity of the light source by measurement of backscattered light from the web. The second wavelength may correspond to a fluorescence emission peak of the coating and preferably of a fluorescent additive of the coating. Where the light source emits at a single wavelength, the said first wavelength preferably is that wavelength.

The sensing head may be operable in a calibration mode to direct light from the light source on to a calibration sample and to direct light received from the calibration source on to the optical fibre means whereby it may be received by the light detector. The calibration sample may be carried by the sensing head or may be mounted near the web.

The measurement apparatus may comprise modulation apparatus for modulating the intensity of the light source. The processing unit may be capable of processing the detected fluorescence to correlate variations in the detected fluorescence with the modulated intensity of the light source. This suitably allows compensation to be made for the effects of ambient light.

The processing unit may be capable of processing the detected fluorescence to determine the absolute thickness of the coating.

The processing unit is preferably capable of comparing the determined thickness of the coating or a representation thereof with a pre-set value (which preferably corresponds to a desired thickness) and generating a feedback signal for controlling the continuous deposition process to correct for deviations of the determined thickness from the pre-set value. The measurement apparatus preferably includes user input means such as a keypad or a rotatable knob connected to the processing unit for allowing a user to input the pre-set value.

The light detector preferably comprises a detection unit such as a photodiode or a photomultiplier, and optionally means for discriminating the spectral content of the detected light such as a spectrometer and/or one or more filters. The light detector is preferably capable of detecting the intensity of received light.

The processing apparatus preferably processes the detected fluorescence by processing a signal generated by the light detector in dependence on the detected fluorescence. The processing apparatus may, for example, be analogue and/or digital processing apparatus. The processing apparatus is preferably capable of processing the detected fluorescence to determine the absolute thickness of the coating. An indication of this thickness may be displayed by the processing apparatus. The processing apparatus is preferably capable of generating a control/feedback signal for the apparatus of the continuous deposition process, in dependence on the determined thickness of the coating, for maintaining the thickness at a pre-set value. The processing apparatus preferably comprises a memory for storing the value, a comparator for comparing the value with the determined thickness and feedback apparatus for generating the control/feedback signal on the basis of that comparison. The control/feedback signal is preferably for controlling the continuous deposition process to correct for deviations of the determined thickness from the pre-set value.

The coating preferably comprises a fluorophore as an additive, together suitably with a coating component/material capable of forming a stable coating on a substrate in the absence of the fluorophore. The coating material may be a wax. The coating may be a release coating. The fluorescence spectrum of the fluorophore is preferably substantially outside, and preferably peaks outside, any fluorescence spectrum of the coating material. The fluorophore is suitably excitable to fluoresce by visible light and/or near infra-red light. The fluorophore suitably fluoresces with visible and/or near infra-red light. The fluorescence emission spectrum of the fluorophore is preferably substantially outside the absorption spectrum of the coating component.

The light source preferably emits light and/or illuminates the coating over a spectrum that includes the region of the spectrum capable of exciting the fluorophore to fluoresce, i.e. that at least partially overlaps the fluorescence excitation spectrum of the coating. The light source preferably emits light and/or illuminates the coating over a spectrum substantially outside the fluorescence emission spectrum of the fluorophore and/or any region of the spectrum capable of exciting the coating material to fluoresce.

According to a second aspect of the invention there is provided continuous production apparatus comprising: a deposition unit for continuously depositing a coating on a substrate; and measurement apparatus having any of the features as set out above for measuring the thickness of the coating. The deposition unit preferably is preferably adjustable to vary the thickness of the coating, suitably under the control of the processing apparatus, and preferably by means of the control/feedback signal, whilst the continuous deposition process is running. The continuous deposition process preferably involves the deposition of the coating on to a web of sheet material, such as a film. The substrate may comprise a fluorescent component. The peak fluorescence emission of that fluorescent component is preferably spaced spectrally from that of the fluorescent component in the coating. The coating is preferably substantially non-absorbent over the fluorescence emission peak of the fluorescent component of the substrate.

Where the coating comprises a fluorophore component, the fluorophore preferably comprises less than 0.5% and most preferably less than 0.3% or 0.2% by weight of the coating and/or of a precursor material of the coating (e.g. containing a solvent) prior to deposition of the coating.

The present invention will now be described by way of example with reference to the accompanying drawings, in which:

figure 2 shows a schematic diagram of part of a production line for thermal transfer foil;
figure 3 shows part of a thickness measurement apparatus;
figure 4 shows one type of measuring head arrangement for measuring apparatus; and
figure 5 shows a second type of measuring head arrangement for measuring apparatus.

In the figures like references indicate like parts.

The following example of the present invention is for the detection of coating thickness in the production of thermal transfer foil. It will be appreciated that this is just an example of the uses to which the present invention can be put.

Figure 2 shows part of the apparatus for the manufacture of the thermal transfer foil of figure 1. A polyester sheet is fed from a reel 10 into a coating station 11. In the coating station a wax solution is applied to the moving sheet by a coating roller 12, and the sheet then moves past a dryer 13 that causes the solvent to evaporate and fixes the coating layer on the sheet. The sheet is then re-wound on a take-up reel 14 to be taken to the next step in the manufacturing process. A container 34 holds the wax solution 15 that is to be deposited by the coating roller. The thickness of the deposited release layer can be altered by adjusting feed of solvent or concentrate to container 34.

Apparatus for measurement of the thickness of the release layer is installed on the part of the production line shown in figure 2. The measurement apparatus comprises a measuring head shown generally at 20 that is mounted facing the deposited release layer and close to the sheet between the dryer 13 and the take-up reel 14. The measuring head 20 is mounted on a carriage 21 which rides on a support rail 22 set parallel to the sheet and across the direction of travel (see arrows A) of the sheet. The carriage can be driven along the rail by electric motor 23. A control unit 24 is set near the production line. The control unit can control the measuring head and receive measurement signals from the measuring head via a connection 25, can control the motor 23 via connection 26 in order to move the measurement head across the web, and can issue control signals to the coating station 11 to alter the thickness of the deposited coating layer via connection 27 to adjustment equipment for the solvent or concentrate feed. The system thus allows for closed-loop control of the coating thickness. A display 28 and a keyboard 29 are provided at the control unit to allow an operator to configure the control unit. A typical width of the web is 1.25m.

Before the release layer is deposited a fluorescent component is added to the wax solution. The measuring head 20 comprises a light source 30 that is capable of exciting the fluorescent component and a light detector 31 that is capable of detecting the resulting fluorescence of the fluorescent component. After local processing by an interface unit 32 the signal from the detector 31 is fed to the control unit 24 via connection 25. The greater the thickness of the release layer, the greater is the intensity of the resulting fluorescence. Therefore, the control unit is capable of measuring the thickness of the release layer and controlling it as the process runs by adjusting feed to container 34.

The measurement system will now be described in more detail.

The wax of the release coating is deposited from a solution 15 held in the container 34. The wax release coating solution to be measured is doped with an accurately controlled concentration (e.g. 0.15%) of fluorophore. One suitable fluorophore is rhodamine 101 inner salt, which can be excited to fluoresce by light in the visible range of the spectrum between ~520nm to ~580nm. The fluorescence peaks at a wavelength of around 600 nm. Further details of this and other suitable fluorophores are given in our co-pending patent application entitled "Fluorescent Materials" and filed on the same date as the present application (... patent application number ...), the contents of which are incorporated herein by reference.

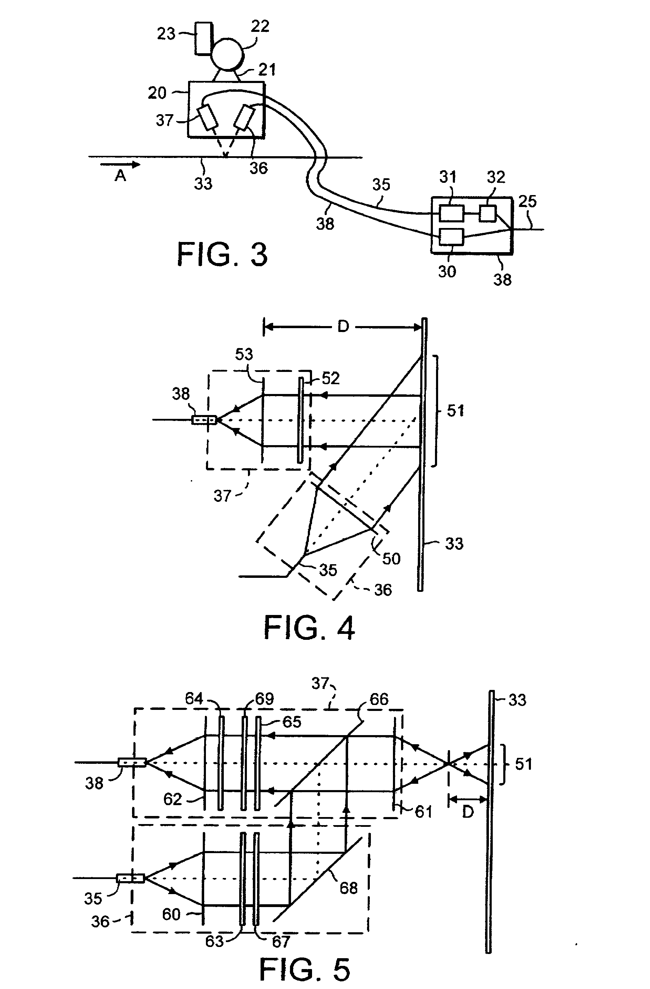

To avoid problems of vibration and contamination close to the running production machinery, and to allow the detection head to be reduced in size, a preferred construction is that shown in figure 3. In the construction of figure 3 the emitter 30 and detector 31 are located remotely from the head. Light from the emitter 30 is passed by a flexible fibre-optic cable 38 to an emitter lens arrangement 36 at the head 20. Detected light is passed from a detector lens arrangement 37 along a flexible flexible fibre-optic cable 35 to the detector 31. The emitter 30, detector 31 and interface unit 32 are mounted in a stationary enclosure 38 remote from the film 33.

The light that is shone on to the web 33 by the detection head must be capable of exciting the fluorophore. Therefore, the light source 30 should be selected to be compatible with the excitation spectrum of the fluorophore. Where the fluorophore is rhodamine 101 inner salt one efficient source of excitation is a diode-pumped solid state Nd-YAG laser, frequency doubled to emit at 532 nm. The apparatus of figures 2 to 5 uses a 10mW Nd-YAG laser supplied by Laser 2000. It is compact (with a typical size of approximately 15mm diameter and approximately 100mm length), simple to drive (e.g. from a DC 5 V power supply) and its output beam is easily launched into multimode optical fibre 38. The laser body should be mounted in good thermal contact with a heat sink, such as a finned aluminium block to maintain the laser temperature within working limits. A laser of this specification is Class 3B, and requires suitable design of the system to ensure that the direct beam is not visible by a user.

In this specific embodiment the fibre 38 is a multimode fibre of 62.5/125 μm core/cladding diameter and numerical aperture 0.22. A fibre length of 12m allows flexibility in the positioning of the components 20 and 38 of the measuring apparatus. The laser beam is launched into the fibre by a ×10 microscope objective (numerical aperture 0.60) mounted on a multimode fibre positioner assembly (e.g. Newport type MF-915 T) with fibre chuck and x-y positioning. The fibre output face is held against a graded index lens (0.23 pitch at 633nm) to form a light spot of approximately 4mm major axis when illuminating the foil at an angle of approximately 45° to the normal at a distance of approximately 100 mm. An optical power of around 3mW is delivered by the 10mW laser. Of course, other arrangements are possible.

The function of the probe optics 36, 37 is to deliver excitation light from the laser to the measurement area on the web and collect the fluorescence from the measurement area for detection. Practical considerations for the probe optics are efficient discrimination between the excitation and fluorescence signals and sensitivity of the signal collection to out-of-plane movement of the foil, as illustrated by arrows B in figure 2.

Two basic types of probe design are preferred: off-axis and confocal.

An off-axis probe is illustrated in detail in figure 4. The excitation light is incident on the web 33 at an angle such that the specular reflection from the web surface cannot enter the probe collection optics 37. The excitation optics 36 are angled to the web and contain a lens 50 that directs the excitation light over an excitation area 51 of the web. At the collection optics 37 light from a smaller collection area of the web passes through a cut-on or band-pass filter 52 and a lens 53, both of which are mounted in a cylindrical probe body approximately 30 mm in diameter. The lens 53 images the target spot on to the input face of the collection fibre 38, which for convenience is mounted in a fibre connector at the output end of the probe body. The filter 52 to be mounted in front of the lens reduces the intensity of scattered excitation light and defines the wavelength region collected as the fluorescence signal. One design of such a probe has a 6mm focal length aspheric lens (supplied by, for instance, Thor Labs) with a 25.4mm diameter filter. Filters used are an Ealing 35-5602 580 nm cut-on interference filter and an Ealing 35-3821 600 nm band-pass 10nm wide interference filter.

If the distance from the probe to the foil (D in figure 4) changes, then it is possible that the intensity of the collected signal will change, as the position of the illuminated spot will vary slightly within the field of view of lens 53. In some cases periodic motion of the film could be averaged out over the field of view of the lens 53 to give the same information. If in a particular implementation the measurement instruments are especially sensitive to this effect then it may be found that use of the confocal probe design will overcome the problem.

A confocal probe design is illustrated in figure 5. In this design the excitation beam and collection optics share a common axis. There are several possible arrangements in which the excitation beam and collection optics share a common axis. In figure 5 60, 61 and 62 are lenses; 63 and 64 are polarisers; 65 is a cut-on or band-pass filter; 66 is a beam splitter; 67 and 69 are quarter-wave plates; 68 is a mirror; 38 is the collection optical fibre, and 35 is the excitation fibre. Light emerges from optical fibre 35, enters lens 60 and is subsequently transmitted via lens 61 as a uniform beam onto the web 33. Assuming that the surface of the web - the release coating of the sheet - is a diffuse optical source, that is it is equally radiant in all directions, then only those rays confocal with lens 61 will reach the collection fibre at 38. As the defocus distance D varies, the area imaged by lens 61 varies. However, the area illuminated on the film is the same as that imaged by the lens 61 and therefore the optical power received at collection fibre 38 remains constant.

The purpose of polariser 63 after lens 60 is to control the excitation power to the film and to introduce a mechanism for excitation signal control at 64. By passing the excitation signal through a quarter-wave plate 67, the linear polarisation is converted into circular polarisation, and if this is preserved on reflection from the film, the handedness of the polarisation state is then reversed on its return path. This means that when it gets to polariser 64 the state of polarisation will then be orthogonal to that of the incoming beam and any reflected light is rejected, increasing the sensitivity of the detection circuitry to the fluorescence. Similarly, polariser 64 could be rotated so as to let through some or no excitation signal that has been reflected from the film. Since none of these optical components is perfect, it is inevitable that a little transmission of unwanted light will occur nevertheless.

Either design of detection head may be mounted in a fixed location relative to the web, or on a moving carriage as illustrated in figures 2 and 3 to allow it to scan across the full width of the web. There may be more than one detection head - for example a set of detection heads may be mounted across the width of the web. For both designs of head there is a need to select the size of the illuminated area 51 dependent on the intensity of the illuminating light to ensure that there is a sufficient fluorescent intensity for efficient and accurate detection.

The distance between the web and the head may be around 20 to 40mm. The use of a lens/mirror system for delivering and collecting light to and from the web affords an important degree of control in focussing the excitation light at the desired distance from the probe, and improves the efficiency of collection of fluorescence by the collection fibre, by focussing the fluorescent emission on to the collection fibre end face. In both aspects, account may be taken of the likely movement of the web relative to the probe head. The optical system can be designed to minimise the sensitivity of the excitation and collection system to out-of-plane foil displacement.

The collection fibre 38 conveys the fluorescent radiation to the detector unit. It has been found to be convenient to use a larger core for this than for the excitation fibre - for instance 400/430 $\mu$m core/cladding diameter - to reduce alignment sensitivity. The fibre length is again 12m. The fibre terminates in a standard SMA connector for input to the detector 31. Note that, in particular with larger core fibres, the minimum recommended bend radius should be observed in use to minimise risk of breakage.

The fibres are flexible to allow the head to be traversed across the web.

The detector 31 converts the received optical radiation into an electrical signal for processing by the data acquisition and display system of the control unit 24. Types of detector that could be used include a photodiode and a photomultiplier, and optionally means for discriminating the spectral content of the detected light such as a spectrometer. The spectrometer is a useful tool during development of a system, and may give more possibilities for post-processing of the detection signal at the control unit 24. A detector comprising a photomultiplier and perhaps one or more filters is useful for its sensitivity and speed of response. To reduce sensitivity to ambient light the intensity of the stimulation light could be modulated and the corresponding variation of the detected light monitored. With present technology this approach would be more practical for a detector comprising a photomultiplier and one or more filters because of its quick response time, although a spectrometer (which might typically require an integration time of around 500 ms) could be used with longer modulation periods.

A suitable spectrometer is the Ocean Optics S2000 fibre optic spectrometer supplied by Anglia Instruments Ltd. The optical input is a standard fibre connector socket. It is a compact unit containing a diffraction grating as the dispersive element which is read by a 2048 element CCD array detector, giving a near-real-time spectrum over the range 350 to 1000 nm using an integration time between ~200 ms and 2 s.

A suitable photomultiplier is the Hamamatsu H5784 photomultiplier module. It is a compact unit incorporating a high-voltage power supply and a low-noise amplifier, requiring a $\pm15$V DC supply. Optical input is by a standard fibre connector socket. The amplifier's gain can be set by an externally supplied control voltage between 0 and 1 V.

The signal/noise ratio in the detected signal must be sufficiently great to provide accurate measurements. The noise may be reduced by precautions in the design of the detector head, such as shielding it and the web below it from ambient light. Post-processing (e.g. by filtering or difference analysis) of the detected signal may also to reduce noise, and the excitation intensity could be modulated to allow this to be done more accurately over time.

It would be convenient for the output from any detector to be input in digital form to the processing circuitry of the control unit 24. This may require the use of an A-D converter in interface 32. The control unit may be a standard personal computer programmed to analyse the received signals, and control the stimulating light source (including any modulation of the source) and any carriage bearing the measurement head. Once the signals have been analysed the control unit may display them and/or control the production machinery (according to a predetermined or a learned closed-loop algorithm) to maintain a pre-set coating thickness. The coating thickness could also be adjusted manually by an operator through the control unit or directly on the production machinery. The apparatus need not generate an absolute measure of the thickness of the coating layer; instead the apparatus could merely check on the uniformity of the thickness. Instead of controlling the thickness the apparatus could merely generate an indication of thickness or deviation from uniformity. An alarm could be activated if the thickness is outside operator-set limits.

Fluorescence intensity is generally related to film thickness by:

$$I_f = \Phi_f I_{ex}\left(1 - 10^{-\varepsilon ct}\right)$$

where $I_{ex}$ is the excitation beam intensity, $\Phi_f$ is the fluorescence quantum yield, $\varepsilon$ is the molecular absorption coefficient, c is the molar concentration of the fluorescent component and t is the film thickness. For thin films and/or low concentrations of fluorescent component, when ($\varepsilon$ct) is small, the relationship approximates to:

$$I_f = 2.303\Phi_f I_{ex}\varepsilon ct$$

Thus, under preferred conditions the measured fluorescence intensity is linearly proportional to film thickness. These relationships can be used to help determine the measured thickness, although calibration is preferred, to compensate for material parameters of the coating materials and to accommodate variations over time in the beam intensity.

Since the intensity of the light source may vary over time it is desirable to be able to detect variations in that intensity so that they can be taken into account in thickness calculations. This is particularly important for long-term stability in monitoring slow changes in the industrial process. One method of doing this is by measuring the intensity of radiation that is back-scattered from the web. In normal use a filter may be located between the web and the detector, either in the sensor head or at the station where the detector is located, to filter out back-scattered light at the excitation/emission wavelength but to allow longer wavelength fluorescent response light to be received by the detector. In a calibration mode that filter may be moved out of the optical path and preferably replaced by a filter that blocks the response wavelength but allows the emission wavelength to pass. The filter(s) may be engagable under the control of the control processor so that it can automatically control the equipment to enter a calibration mode. Another calibration method is to measure the fluorescence from a standard target. In that case, the target may be carried by the sensor head - in which case the head's optics may include means such as a movable or switchable mirror for directing the optical paths to the target or for moving the target into the optical paths - or the target may be mounted next to the web - in which case the head may be moved so as to measure the target. Again, these operations are preferably under the control of the control processor. The control processor may cause a calibration mode to be entered temporarily at regular intervals. If a spectrometer is used as the detector, the intensity reference can be derived from the 532 nm region of the spectrum obtained with the 580 nm cut-on filter, as its transmission at 532 nm is still sufficient to allow laser radiation to be detected. Alternatively, a detector such as a photomultiplier may be used with a bandpass filter, typically centred on 600 nm, which rejects 532 nm light which would contaminate the detected fluorescence. Hence a separate reference detector is required. This may be arranged using a fibre directional coupler to split the incoming optical power between the photomultiplier and the reference detector (which can be a silicon photodiode or avalanche photodiode).

To reduce the effect of vibration of the web as it passes the measurement head the web could be guided over or between additional rollers near the head. In particular, the web could pass tautly over one or more rollers directly under the head.

Other fluorophores could, of course be used instead of rhodamine 101 inner salt. The system described above is based on visible wavelength excitation and detection. One alternative is the use of fluorophores that can be excited in the near IR spectral region, at ~800 nm wavelength. The source in this case could be a laser diode; these are commercially available in the range 780 to 830 nm with powers between 5 and 50 mW. In selecting a fluorophore for other applications where the fluorophore is to be mixed with a carrier or coating material the fluorophore should be selected to be one whose emission spectrum lies substantially outside that of the other material.

There are great advantages in using visible or infra-red illumination of the substrate over using ultra-violet illumination, especially when optics are used for focussing of the illumination and/or response beams. First, lenses for IR and visible light are typically smaller and dissipate less waste heat, with losses generally being greater at shorter wavelengths. Second, standard optical components can be used rather than specialised UV optics. Third, operation in the IR and visible range has been found to provide significantly greater selectivity and therefore more accurate estimation of thickness.

The apparatus of figures 2 to 5 could be adapted for use in other situations, including situations outside the field of application of coatings during web manufacturing. By adding fluorophores to other materials, or by exploiting materials' natural fluorescence, similar measurements could be made of the thickness (or deposition density) of those materials instead of the wax release coating described above. The measurement could be conducted on moving sheet materials or stationary materials. Where the thickness of a coating is being measured, the coating could be deposited by any suitable method, including flexo and gravure printing. Preferably, but not necessarily the coating is measured in its dry state - since the final thickness is then better known.

An advantage of the apparatus described above is that, with suitable detection and excitation equipment, it allows for measurement of thickness over a very wide range, for example across five or more orders of magnitude. This range could be extended further in a given process by simply reducing the concentration of the fluorophore in the material under study. Furthermore, the non-contact and rapid nature of the detection process makes it especially suitable for use in a continuous process and for thickness control via feedback.

In a multi-layer product different fluorophores having different fluorescence spectra could be added to the materials of different layers to allow the thicknesses of those layers to be detected independently after one has been deposited over the other. This technique may also be used to normalise for differences in the sample to detector distance D. For example, in the system of figures 2 to 5, a fluorophore could be added to the backing film 1, which has a constant thickness. The intensity detected from the fluorescence from the film could be compared with that from the release coating 2 to normalise the measurement of coating thickness.

Instead of a laser other light sources such as light emitting diodes and fluorescent or incandescent bulbs may be used.

The present invention may include any feature or combination of features disclosed herein either implicitly or explicitly or any generalisation thereof irrespective of whether it relates to the presently claimed invention. In view of the foregoing description it will be evident to a person skilled in the art that various modifications may be made within the scope of the invention.

**Claims**

1. Measurement apparatus for measuring the thickness of a fluorescent coating on a web in a continuous deposition process, the measurement apparatus comprising:

   a control arrangement including a light source, a light detector and a data processing unit; and a sensing head located adjacent the web and including an optical arrangement coupled to the light source and the light detector by optical fibre means and arranged to focus light received from the light source via the optical fibre means on to the web and to focus light received from the web on to the optical fibre means whereby it may be received by the light detector; and a drive arrangement operable under the control of the data processing unit to move the sensing head across the web;

   the data processing unit being arranged to receive from the light detector a signal indicative of a detected light intensity and to process that signal to determine an indication of the thickness of the coating.

2. Measurement apparatus as claimed in claim 1, wherein the optical arrangement is coupled to the light source by a first optical fibre and to the light detector by a second optical fibre.

**3.** Measurement apparatus as claimed claim 2, wherein the optical arrangement includes first optics for focussing light passing between the sensing head and the web, second optics for focussing light passing between the first optics and the first optical fibre, third optics for focussing light passing between the first optics and the second optical fibre and a beam splitter located between the first optics and the second and third optics.

**4.** Measurement apparatus as claimed in claim 3, wherein the third optics comprises a lens for focusing light received from the web and the sensing head is arranged to illuminate the web through the lens.

**5.** Measurement apparatus as claimed in claim 4, wherein the sensing head is arranged to receive light from the web in a reception direction and to illuminate the web in a direction parallel to the reception direction.

**6.** Measurement apparatus as claimed in claim 1 or 2, wherein the sensing head is arranged to receive light from the coating in a reception direction and to illuminate the coating at an angle to the reception direction.

**7.** Measurement apparatus as claimed in any preceding claim, wherein the light source is a laser.

**8.** Measurement apparatus as claimed in claim 7, wherein the light source is a frequency doubled laser.

**9.** Measurement apparatus as claimed in claim 8, wherein the light source is a frequency doubled Nd-YAG laser.

**10.** Measurement apparatus as claimed in any preceding claim, wherein the light source is capable of emitting light at a single wavelength.

**11.** Measurement apparatus as claimed in any preceding claim, wherein substantially all the emission of the light source is at a wavelength greater than 500nm.

**12.** Measurement apparatus as claimed in any preceding claim, wherein the light source and/or the sensing head are arranged to illuminate the web with polarised light and the sensing head includes a polariser for filtering light received from the web.

**13.** Measurement apparatus as claimed in any preceding claim, wherein the detector is operable in a calibration mode to selectively sense light of a first wavelength corresponding to an emission wavelength of the light source and in a measurement mode to selectively sense light of a second wavelength longer than the first wavelength.

**14.** Measurement apparatus as claimed in any preceding claim, wherein the sensing head is operable in a calibration mode to direct light from the light source on to a calibration sample and to direct light received from the calibration source on to the optical fibre means whereby it may be received by the light detector.

**15.** Measurement apparatus as claimed in claim 14, wherein the calibration sample is carried by the sensing head.

**16.** Measurement apparatus as claimed in any preceding claim, comprising modulation apparatus for modulating the intensity of the light source, and wherein the processing unit is capable of processing the detected fluorescence to correlate variations in the detected fluorescence with the modulated intensity of the light source.

**17.** Measurement apparatus as claimed in any preceding claim, wherein the processing unit is capable of processing the detected fluorescence to determine the thickness of the coating.

**18.** Measurement apparatus as claimed in any preceding claim, wherein the processing unit is capable of comparing the determined thickness of the coating with a pre-set value and generating a feedback signal for controlling the continuous deposition process to correct for deviations of the determined thickness from the pre-set value.

**19.** Continuous production apparatus comprising:

a deposition unit for continuously depositing a coating on a substrate; and
measurement apparatus as claimed in any preceding claim for measuring the thickness of the coating.

FIG. 1

CONCENTRATE

SOLVENT

APPLICATION
OF LACQUER
LAYER

FIG. 2

FIG. 3

FIG. 4

FIG. 5